# EUROPÄISCHE PATENTSCHRIFT

(11) **EP 1 518 427 B1**
(45) Veröffentlichungstag und Bekanntmachung des Hinweises auf die Patenterteilung: **26.04.2006**
(21) Anmeldenummer: 02747192.9
(22) Anmeldetag: 31.05.2002
(51) Int. Cl.: H04Q 7/30

(54) **ABFRAGE DER AKTUELL GÜLTIGEN BITRATEN BEI UNTERBRECHUNG EINES TRFO-CALLS (ANRUFS)**
INTERROGATION OF THE CURRENT VALID BIT RATE FOR THE INTERRUPTION OF A TRFO CALL
INTERROGATION DES DEBITS BINAIRES ACTUELLEMENT VALIDES EN CAS D'INTERRUPTION D'UN APPEL TRFO

(43) Veröffentlichungstag der Anmeldung: 30.03.2005
(73) Patentinhaber: SIEMENS AKTIENGESELLSCHAFT, 80333 München (DE)
(72) Erfinder: BACHMANN, Frank, 10179 Berlin (DE); BAEKELANDT, Bart, B-9090 Melle (BE); GUARINO, Lorenzo, IT-20035 Lissone (IT); SEITTER, Norbert, 82008 Unterhaching (DE); VAN DEN DRIES, Benny, B-2230 Herselt (BE); VESELY, Alexander, A-1170 Wien (AT)
(86) Internationale Anmeldenummer: PCT/DE2002/002009
(87) Internationale Veröffentlichungsnummer: WO 2003/103313

(56) Entgegenhaltungen:
- EP-A- 1 124 386
- WO-A-00/70885
- WO-A-99/59356
- US-A- 5 991 716

## Beschreibung

Die Erfindung betrifft Verfahren und Vorrichtungen zum Einfügen einer akustischen Sequenz in einen im TrFO-Format über eine Verbindung durch ein Mobilfunknetz mit Vermittlungsstellen (UMSC) und Luftschnittstellensteuerungseinrichtungen (RNC) zwischen zwei Mobilstationen übertragenen Datenstrom.

Wie aus verschiedenen Lehrbiachern, beispielsweise Jacek Biala, 1994, ISBN-3-528-15302-4, Vieweg-Verlag bekannt, erfolgt eine Mobilfunkkommunikation zwischen zwei Mobilstationen in einem Mobilfunknetz von einer Mobilstation (User-Equipment-UE)über eine Luftschnittstelle (Air Interface/ Radiolink) zu einer Basisstation (BTS/Node-B etc) und ggf einen Radionetworkcontroller (BSC/RNC etc) über Vermittlungsstellen (Mobile-switchingcenters UMSCs oder Mediagateways-MGW etc) und über eine weitere Basisstation zu einer zweiten Mobilstation (UE). Da in einem Mobilfunknetz in der Regel eine Vielzahl von Teilnehmern telefonieren, werden über das Corenet eines Mobilfunknetzes, insbesondere zwischen Vermittlungseinrichtungen (Mediagate-ways), erhebliche Datenmengen übertragen. In der WO93/00778A1 wurde vorgeschlagen, im Corenet eines Mobilfunknetzes Sprachdaten nicht in einem 64kb/s-PCM-Format etc., sondern im zwischen Mobilstationen und Basisstationen/Radionet-controllern (z.B. gemäß UMTS) zur optimierten Ausnutzung der sehr begrenzten Kanalkapazitäten auf einer Luftschnittstelle verwendeten Sprachdaten-Komprimierungsformat zu übertragen; somit werden die Sprachdaten in dem Format, in welchem sie (beispielsweisegemäß UMTS-Standard) über eine Luftschnittstelle übertragen werden auch innerhalb des Corenet des Mobilfunknetzes übertragen. Hierfür werden (unter UMTS etc.) bekannte Transcoder (welche bisher in einer Basisstation oder MSC etc. Sprachdaten aus dem komprimierten Luftschnittstellen-Format in ein nicht-komprimiertes 64kb/s-PCM-Format für die Übertragung im Corenet eines Mobilfunknetzes umgewandelt haben) ausgeschaltet beziehungsweise umgangen (Transcoder-Free-Operation = Transcoder-freier-Betrieb = TrfO = Unvocoded Operation).

Auch aus 3GPP (3GTS23.153 release 4,3 GTS 25.415 release 4) ist es bekannt, die Übertragung zwischen zwei Mobilstationen (MS) ohne wiederholte Dekomprimierung und Komprimierung in Transcodierungseinrichtungen in Luftschnittstellenübertragungseinrichtungen (RNC/BS) zur Vermeidung von Qualitätsverlusten (die bei jeder Transcodierung auftreten) zu übertragen (Trancoder Free Operation =TrFO); die Datenpakte (Sprach-frames) werden also end-to-end (von Mobilstation zu Mobilstation) ohne Dekomprimierung/Komprimierung in Transcodierungseinrichtungen von Luftschnittstellenübertragungseinrichtungen (RNC/BS) des Mobilfunknetzes übertragen.

Zur Übertragung von Datenpaketen (Sprachdaten, Multimediadaten etc.) eines zwischen Mobilstationen zu übertragenden Datenstroms wird für die Übertragung innerhalb des Mobilfunk-Corenet (also zwischen Luftschnittstellenübertragungseinrichtungen und ggf. über Vermittlungsstellen wie UMSCs etc.) das Framing-Protokoll (Protokoll zur Übertragung in Rahmen) UP (UP=Userplane=Benutzerebene) verwendet. Während des Verbindungsaufbaus einer Verbindung zwischen Mobilstationen (Call-Aufbau) wird die Userplane-Übertragung abschnittsweise zwischen den UP-Entities (=Mobilfunknetzeinheiten, die eine Userplane-Übertragung durchführen), also den RNCs (Radio Network Controller = Luftschnittstellenübertragungseinrichtung des Mobilfunknetzes) und UMSCs (UMTS-Mobile-Switching-Station = Vermittlungsstelle des Mobilfunknetzes) aufgebaut. In dieser Initialisierungsphase der Userplane-Übertragung wird auf jedem Abschnitt der Verbindung (zwischen RNCs und UMSCs bzw. UMSCs) das gleiche Mapping zwischen zulässigen AMR-Codec-Modes (mit welchen die Daten des Datenstroms auf der Luftschnittstelle gemäß einer Absprache zwischen den Mobilstationen und/oder RNCs codiert übertragen werden können) und einem entsprechenden Identifier (Identifizierungsdatum zur Identifikation, in welchen Modi ein 20msec Sprachsample transcodiert wurde- für einen Header in Datenpaketen des Datenstroms) RFCI (Radio Access Bearer Subflow Combination Identifier) eingestellt, also z. B. in Tabellen in den UP-Übertragungs-Entities RNC und UMSC etc. Das Datum RFCI ist Bestandteil eines Headers eines UP-frames (Rahmens), der ferner 20 Millisekunden lange Sprach-Samples (Sprachsequenzen) beinhaltet und gibt an, in welchem AMR-Codec-Mode ein Sprach-Sample codiert ist. Nach erfolgreichem Verbindungsaufbau (einschließlich UP-Initialisierung) schaltet eine UMSC-Vermittlungsstelle in einen Modus, in dem sie Sprach-Frames transparent ohne Behandlung und Auswertung von UP-Informationen routet (weiterleitet). In einer UMSC ist das RFCI-Mapping (Zuordnung von RFCI-Headern zu Codec-Modes) während der UP-Initialisierung abgespeichert worden. Allerdings können während eines TrFO-Calls (Anrufes) von den aktuell gültigen (beispielsweise zwischen den beteiligten Mobilstationen/RNCs ausgehandelten) Bitraten von einem RNC (Radio-Network-Controller = Luftschnittstellenübertragungseinrichtung des Mobilfunknetzes) verboten oder verbotene Bitraten wieder zugelassen werden. Solche Änderungen von aktuell erlaubten und verbotenen AMR-Codec-Modes sind der Vermittlungseinrichtung UMSC nicht bekannt, da während der transparenten (Weiterleitung ohne Beachtung des Inhalts) Übertragung von UP-Datenpaketen des Datenstromes während eines TrFO-Calls durch die UMSC keine Auswertung hinsichtlich erlaubter AMR-Codec-Modes etc. erfolgt.
Für bestimmte Dienste bzw. das Einspielen von akustischen Sequenzen (Tönen, Ansagen etc.) muss ein TrFO-Call durch ein TrFO-Break-Equipment einer UMSC unterbrochen werden, also vom TrFO-Break-Equipment der UMSC die akustische Sequenz (Ton, Ansage etc.) in einem derzeit von den RNCs erlaubten gültigen AMR-Codec-Mode in den Datenstrom eingefügt werden (indem entweder die akustische Sequenz repräsentierende Datenpakete des Datenstroms zwischen den Mobilstationen (Sprachübertragung) ersetzen, oder indem beispielsweise die akustische Sequenz und Sprachsequenzen des Datenstromes zwischen Mobilstationen additiv überlagert werden etc). Da die Vermittlungseinrichtung UMSC die akustische Sequenz (Ton/Ansage) in einem derzeit gültigen AMR-Codec-Mode einfügen muss, muss sie die aktuell gültigen Codec-Modes kennen.

Eine bereits evaluierte Lösung ist das ständige Überwachen (Monitoring) der RFCIs und der UP-Inband-Signalisierungsinformationen während eines TrFO-Calls (ohne Transcodieren, nur durch Auswerten der Header-Information). Dies ist jedoch relativ aufwendig.

Aufgabe der vorliegenden Erfindung ist es, die Einfügung einer akustischen Sequenz wie beispielsweise eines Tons oder einer Ansage in einen ein Gespräch repräsentierenden Datenstrom in einer Vermittlungsstelle eines Mobilfunknetzes möglichst effizient zu ermöglichen. Die Aufgabe wird jeweils durch die Gegenstände der unabhängigen Ansprüche gelöst.

Erfindungsgemäß wird eine Mitteilung aktuell gültiger Codec-Modes (und entsprechend RFCIs) durch eine Anfrage einer Vermittlungsstelle (UMSC etc) bei einer Luftschnittstellenübertragungseinrichtung (RNC etc) mit einer Angabe von aus der Verbindungsinitialisierung (der UP) der Vermittlungsstelle bekannten Codec-Modes in einem Rate-Control-Command (Raten-Steuerungsbefehl), welche die Luftschnittstellenübertragungseinrichtung RNC zu einer Bestätigungsmitteilung (Rate-Control-Acknowledge) veranlasst, in welcher die aktuell für die Verbindung gültigen AMR-Codec-Modes (bzw. dieser repräsentierende mögliche Datenpaket-Header RFCI) angegeben werden, worauf die Vermittlungseinrichtung UMSC aus diesen Datenpaket- Headern (RFCI) den dem höchsten aktuell möglichen Codec-Mode zugeordneten auswählt und hierauf die einzufügende akustische Sequenz repräsentierende Datenpakete mit diesen Datenpaket-Header (RFCI) codiert in der Userplane von ihr (Vermittlungsstelle UMSC) zu einer Luftschnittstellenübertragungseinrichtung (RNC) überträgt.

Damit wird einfach und effizient und ohne die Notwendigkeit einer ständigen Überwachung von Headern im Datenstrom durch eine Vermittlungseinrichtung (UMSC) ermöglicht, akustische Sequenzen mit gemäß einem aktuell gültigen Codec-Mode erforderlichen RFCI-Headern versehen in den Datenstrom (der Sprachübertragung zwischen zwei Mobilfunkteilnehmern) einzufügen, und zu verhindern, dass ein Codec-Mode verwendet wird, der von einer Luftschnittstellenübertragungseinrichtung RNC aktuell verboten wurde.

Weitere Merkmale und Vorteile der Erfindung ergeben sich aus den Unteransprüchen und der nachfolgenden Beschreibung eines Ausführungsbeispiels anhand der Zeichnung. Dabei zeigt:
- Figur 1: schematisch eine an sich bekannte Übertragung von Datenpaketen eines ein Gespräch repräsentierenden Datenstroms zwischen zwei Mobilstationen über ein Mobilfunknetz,
- Figur 2: schematisch Schritte während des Verbindungsaufbaus,
- Figur 3: eine erfindungsgemäße Signalisierung der aktuell erlaubten Codec-Modes von einer RNC an ein UMSC auf eine Anfrage der UMSC bei der RNC hin.

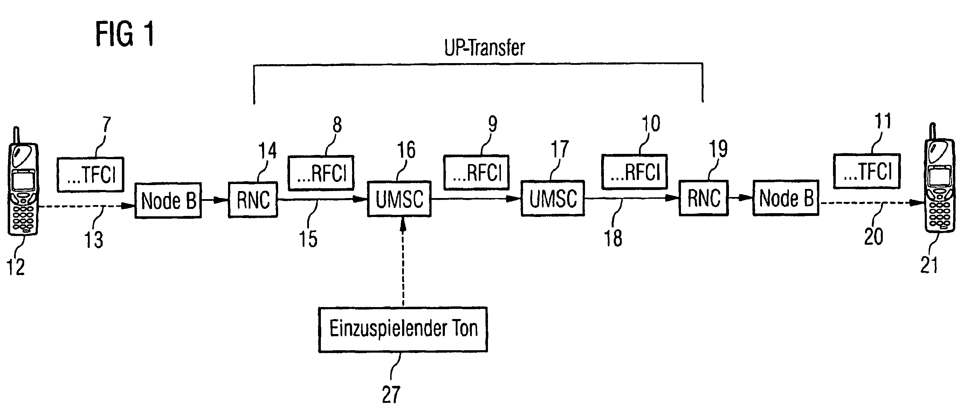

Figur 1 zeigt schematisch die Übertragung von ein Gespräch repräsentierenden Datenpaketen 7, 8, 9, 10, 11 von einer ersten Mobilstation 12 über eine Luftschnittstelle 13 zu einer Luftschnittstellenübertragungseinrichtung 14 (RNC etc.), eine Verbindung zu einer Vermittlungseinrichtung (UMSC) 16, eine weitere Vermittlungseinrichtung 17, eine Verbindung 18 zu einer weiteren Luftschnittstellenübertragungseinrichtung 19 (RNC) und eine weitere Luftschnittstelle 20 zu einer zweiten Mobilstation 21.
Bei einer Paketübertragung eines beispielsweise ein Gespräch repräsentierenden Datenstroms von einer Mobilstation 12 zu einer weiteren Mobilstation 21 durch Paketübertragung werden Datenpakete in der Mobilstation 12 auf verschiedenen (durch TFCI-Header in Datenpaketen 7 angegebene) Teilströme aufgeteilt über die Luftschnittstelle 13 zur Luftschnittstellenübertragungseinrichtung 14 übertragen, in welcher die RFCI-Werte durch zu den TFCI-Werten korrespondierende RFCI-Werte für die Übertragung vom RNC 14 über beispielsweise eine UMSC 16 zu einem RNC 19 im Mobilfunkkernnetz (Mobile-Corenet) ersetzt werden wobei nach der Übertragung zur RNC 19 im RNC 19 RFCI-Werte im Header von Datenpaketen wieder durch TFCI-Werte für die Übertragung in Teilströmen über die Luftschnittstelle 20 zur den Datenstrom empfangenden zweiten Mobilstation 21 ersetzt werden.

Beim Verbindungsaufbau zwischen den beiden UMTS-Teilnehmern MS 12, 21 erfolgt eine Übertragung innerhalb des Mobilfunknetzes (zwischen RCS und UMSCS bzw. UMSCS) mittels des Framing-Protokolls UP (= Rahmen-Übertragungsprotokoll UP; UP = Userplane = Benutzerebene), wobei über die Luftschnittstelle 13 bei einem RNC 14 ankommende Datenpakete 7 mit einem einen AMR-Codec-Mode repräsentierenden Identifier RFCI (Radio Access Bearer Subflow Combination Identifier) als Header übertragen werden. Den RNCs 14, 19 ist bekannt, welchen RFCI jeweils welcher Codec-Mode für die Übertragung von Datenpaketen über die Luftschnittstelle zugeordnet ist. Während des Verbindungsaufbaus zwischen den Mobilstationen wird die Userplane (Benutzerebene) für Übertragung der Datenpakete mit dem Framing-Protokoll UP abschnittsweise zwischen den UP-Einheiten RNC 14, 19 und UMSC 16, 17 aufgebaut. In dieser Initalisierungsphase der UP wird auf jedem Abschnitt das gleiche Mapping (Zuordnung) zwischen den zulässigen (zwischen den RNCs und/oder MS ausgehandelt) AMR-Codec-Modes zu jeweils einem Identifier RFCI festgelegt und z.B. in Tabellen in der jeweiligen UP-Entity (Einheit) 14, 16, 17, 19 gespeichert. Nach erfolgreicher UP-Initialisierung beim Verbindungsaufbau weiß eine UMSC somit, welche zulässigen AMR-Codec-Modes und damit welche diese repräsentierenden RFCI-Header für die UP-Übertragung zum Zeitpunkt des Verbindungsaufbaus zwischen den RNCs auagghandelt wurden. Da die UMSC 16 nach der UP-Initialisierung die Datenpakete nur noch transparent durchreicht (ohne ihren Inhalt hinsichtlich Änderung aktuell gültiger Codec-Modes zu überprüfen), ist ihr nicht bekannt, ob zwischen den Zeitpunkt der UP-Initialisierung beim Verbindungsaufbau und dem aktuellen Zeitpunkt (während der Übertragung eines Gesprächs als Datenstroms) von einem RNC (beispielsweise wegen sich ändernder Luftschnittstellenqualität) bestimmte Codec-Modes verboten oder wieder erlaubt wurden, was sie (16) aber wissen müsste, um eine akustische Sequenz (wie Töne oder Ansagen) in den ein Gespräch repräsentierenden Datenstrom mit einem aktuell tatsächlich gültigen AMR-Codec-Mode und diesen zugeordneten RFCI-Headern für die UP-Übertragung einspielen zu können. Dies wird durch eine erfindungsgemäße Veranlassung der Luftschnittstellenübertragungseinrichtung RNC 14 zur Übersendung aktuell gültiger Codec-Modes und damit implizit daraus resultierender gültiger RFCI-Header erfindungsgemäß ermöglicht.

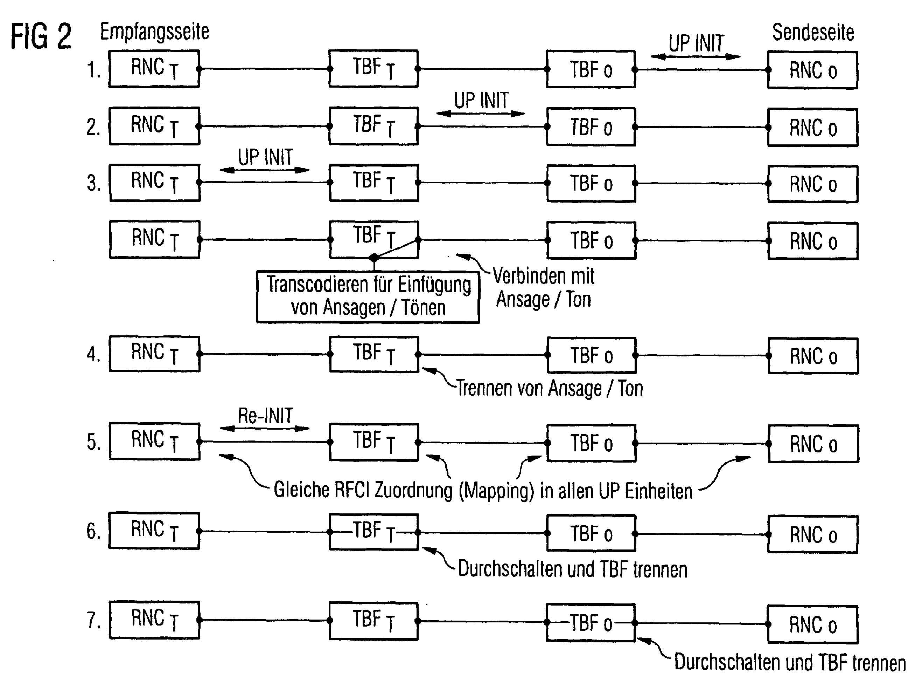

Figur 2 zeigt schematisch die Schritte während eines Verbindungsaufbaus und die Einfügung einer Transcoder-Break-Equipment-Function TBF (Trancodierungsunterbrechungseinrichtung zum Einspielen von Ansagen und Tönen).

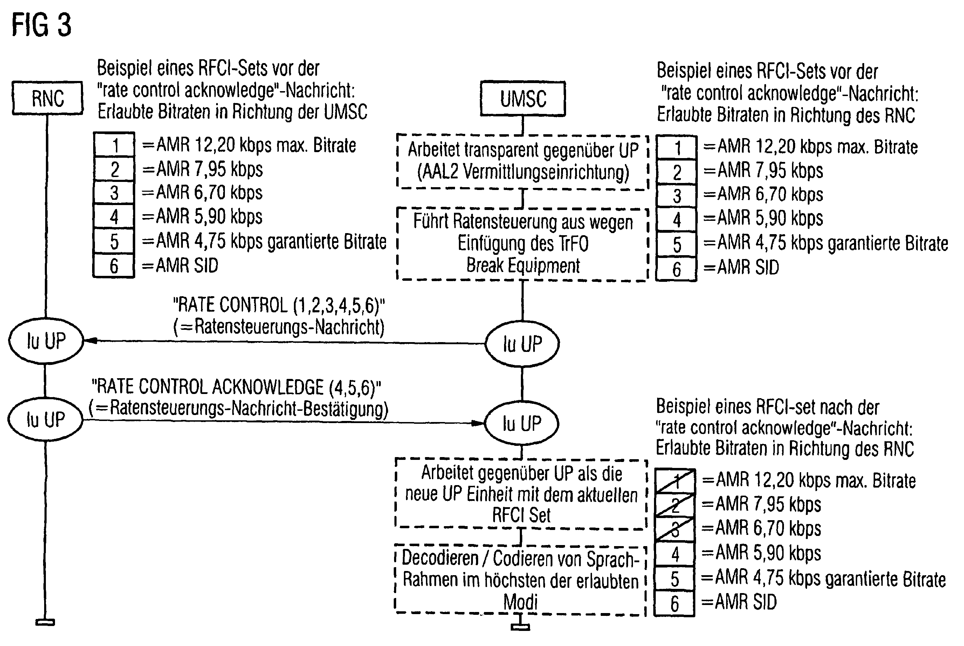

Figur 3 zeigt die erfindungsgemäße Anfrage einer UMSC 16 bei einer RNC 14 und Antwort der RNC 14 mit Übertragung aktuell gültiger Codec-Modes beziehungsweise zugeordneter RFCI-Nummern.

In einer RNC 14 sind die (beim Verbindungsaufbau zwischen MSs und /oder RNCs ausgehandelten) grundsätzlich erlaubten Codec-Modes AMR 12, 20 / AMR 7,95 / AMR 6,70 / AMR 5,90 / AMR 4,75 /, AMRSED durch eine diese repräsentierende Nummer 1 - 6 in einer Tabelle 22 gespeichert. Diese beim Verbindungsaufbau als grundsätzlich möglich erachteten Codec-Modes sind auch in einer Tabelle 23 in der UMSC 16 gespeichert. Die Nummer "1" in der Tabelle 22 ist beispielsweise ein möglicher RFCI-Wert, der gleichzeitig einen AMR-Codec-Mode (nämlich 12,20 = Übertragung mit 12,20 KBPS maximaler Bitrate) angibt. Die UMSC 16 weiß jedoch wegen ihrer transparenten Durchreichung von Datenpaketen nicht, welche Codec-Modes aktuell im RNC gültig sind, und fragt diesen mit einem Rate-Control-Befehl "Rate control (1 ,2 ,3 ,4 ,5 ,6)" (Bezugszeichen 24) an, worauf der RNC in einer "Rate Control Acknowledge (4, 5, 6)" - Antwort mit dem (Bezugszeichen 25) die aktuell gültigen Codec-Modes durch ihre RFCI- Nummer (4, 5, 6) angegeben werden, so dass die UMSC 16 weiß, dass aktuell die Codec-Modes 4, 5, 6 gültig sind, welche sie in einer aktualisierten Tabelle 26 (die ihre bisher gültige Tabelle 23 ersetzt) abspeichert, in der nun nur die aktuell gültigen Codec-Modes in Form korrespondierender RFCI-Nummern 4, 5, 6 abgespeichert sind. Hierauf verwendet die UMSC nur noch die aktuell gültigen Codec-Modes AMR 5,90 / AMR 4,75 / AMRSED (mit den zugeordneten RFCI-Nummern 4, 5, 6) und fügt gegebenenfalls akustische Sequenzen wie Töne und Ansagen in den Datenstrom mit diesen Codec-Modes zugeordneten RFCI-Werten (4, 5, 6) ein.

## Patentansprüche

1. Verfahren zum Einfügen einer akustischen Sequenz (27) in einen Datenpakte (8, 9, 10, 11) umfassenden, im TrFO-Format über eine Verbindung durch ein Mobilfunknetz (14, 16, 17, 19) mit Vermittlungsstellen (UMSC 16, 17) und Luftschnittstellenübertragungseinrichtung (RNC 14, 19) übertragenen Datenstrom,
**dadurch gekennzeichnet, dass**
eine Mitteilung ("Rate-Control (1, 2, 3, 4, 5, 6)", 24) von der Vermittlungsstelle (UMSC 16) aus der Verbindungsinitialisierung bekannten, für die Übertragung von Datenpaketen 8, 9, 10 über die Verbindung im Mobilfunknetz möglichen Datenpaket-Headern (RFCI 1, 2, 3, 4, 5, 6) an die Luftschnittstellenübertragungseinrichtung (RNC 14) gesandt wird,
dass die Luftschnittstellenübertragungseinrichtung (RNC 14) mit einer Bestätigungsmitteilung ("Rate Control Acknowledge (4, 5, 6)", 25) antwortet, welche (25) die auf Grund der aktuell für die Verbindung gültigen Codec-Modi (AMR 5,90 /AMR 4,75 / AMRSED) für die Verbindung möglichen Datenpaket-Header (RFCI 4, 5, 6) angibt,
dass die Vermittlungseinrichtung (UMSC 16) einen dieser Datenpaket-Header ("4") auswählt und hierauf die akustische Sequenz (27) repräsentierende Datenpakete mit diesem Datenpaket-Header (4) versehen in den Datenstrom von ihr (UMSC 16) zu einer Luftschnittstellenübertragungseinrichtung (RNC 14) einfügt.

2. Verfahren nach Anspruch 1 ist
**dadurch gekennzeichnet, dass**
die Vermittlungseinrichtung (UMSC 16) denjenigen Datenpaket-Header (RFCI 4) auswählt, der gemäß einer der UMSC bekannten Tabelle (26) von Datenpaket-Headern und Codec-Modes den aktuell möglichen Codec-Mode (AMR 5,90 KBPS) mit der höchsten Nummer (4) repräsentiert.

3. Verfahren nach einem der vorangegangenen Ansprüche,
**dadurch gekennzeichnet, dass**
eine Luftschnittstellenübertragungseinrichtung (RNC 14) eine Tabelle (22) mit einer Zuordnung von je einem Codec-Mode für die Codierung zu übertragender Datenpakete des Datenstroms über die Luftschnittstelle zu einem Header RFCI für die Übertragung von Datenpaketen in der UP-Übertragung im Mobilfunknetz aufweist.

4. Verfahren nach einem der vorangegangenen Ansprüche,
**dadurch gekennzeichnet, dass**
die Datenpakete durchgehend transparent codiert übertragen werden.

5. Verfahren nach einem der vorangegangenen Ansprüche,
**dadurch gekennzeichnet, dass**
die Datenpakete mittels des Framing-Protokolls "Userplane" (UP) zwischen einer Vermittlungsstelle (UMSC 16) und einer Luftschnittstellenübertragungseinrichtung (RNC 14) übertragen werden.

6. Verfahren nach einem der vorangegangenen Ansprüche,
**dadurch gekennzeichnet, dass**
bei der Initialisierung einer UP-Übertragung in Vermittlungsstellen (UMSC 16) eine Zuordnung von möglichen RFCIs zu jeweils einem möglichen Codec-Mode in einer Tabelle (23) gespeichert wird.

7. Verfahren nach einem der vorangegangenen Ansprüche,
**dadurch gekennzeichnet, dass**
TrFO-Übertragung von Datenpaketen des Datenstromes zur Einspielung von akustischen Sequenzen in den Datenstrom unterbrochen wird, indem eine Einspielung der akustischen Sequenzen durch ein TrFO-Break-Equipment erfolgt.

8. Verfahren nach einem der vorangegangenen Ansprüche,
**dadurch gekennzeichnet, dass**
die akustische Sequenz Töne und/oder Ansagen umfasst.

9. Vermittlungseinrichtung (RNC 16) mit Mitteln zur Durchführung der Schritte des Verfahrens nach einem der vorangegangenen Ansprüche.

10. Vermittlungseinrichtung (16), nach Anspruch 9, mit einer Steuerung, die dazu ausgebildet ist, dass sie im Falle der Notwendigkeit der Einspielung einer akustischen Sequenz in eine durch die Vermittlungseinrichtung laufenden Datenstrom in einer Tabelle (23) in einem Speicher der Vermittlungseinrichtung gespeicherte AMR-Codec-Modes repräsentierende Angaben über eine Schnittstelle an eine Vermittlungseinrichtung (14) sendet und in einer über eine Schnittstelle von der Vermittlungseinrichtung (14) erhaltenen Antwort (25) angegebene aktuell gültige, jeweils Codec-Modes repräsentierende Angaben (4, 5, 6) in einer Tabelle (26) in einem Speicher seitens der Vermittlungseinrichtung (UMSC 16) als aktuell für die Einspielung von akustischen Sequenzen zu verwendende RFC-Werte speichert.

## Revendications

1. Procédé d'insertion d'une séquence acoustique (27) dans un flux de données comprenant des paquets de données (8, 9, 10, 11), transmis en format TrFO via une connexion au moyen d'un réseau de radiocommunication mobile (14, 16, 17, 19) comprenant des centres de commutation (UMSC 16, 17) et un dispositif de transmission par interface à air (RNC 14, 19),
**caractérisé en ce qu'**
un message (« Rate Control (1, 2, 3, 4, 5, 6) », 24) d'en-têtes (RFCI 1, 2, 3, 4, 5, 6) de paquets de données connus par le centre de commutation (UMSC 16) en raison de l'initialisation de la connexion et possibles pour la transmission de paquets de données 8, 9, 10 via la connexion dans le réseau de radiocommunication mobile, sont émis au dispositif de transmission par interface à air (RNC 14),
**en ce que** le dispositif de transmission par interface à air (RNC 14) répond par un message de confirmation (« Rate Control Acknowledge (4, 5, 6) », 25), lequel (25) indique les en-têtes (RFCI 4, 5, 6) de paquets de données possibles pour la connexion en raison des modes codec (AMR 5, 90 / AMR 4, 75 / AMRSED) actuellement valides pour la connexion,
**en ce que** le dispositif de commutation (UMSC 16) sélectionne un de ces en-têtes de paquets de données (« 4 ») et suite à ceci insère les paquets de données représentant la séquence acoustique (27), munis de cet en-tête de paquet de données (4) dans le flux de données, de lui-même (UMSC 16) vers un dispositif de transmission par interface à air (RNC 14).

2. Dispositif selon la revendication 1,
**caractérisé en ce que**
le dispositif de commutation (UMSC 16) sélectionne l'en-tête (RFCI 4) de paquets de données, qui représente le mode codec (AMR 5, 90 KBPS) actuellement possible ayant le numéro le plus élevé (4), selon un tableau (26), connu par le dispositif UMSC, d'en-têtes de paquets de données et de modes codec.

3. Procédé selon l'une quelconque des revendications précédentes,
**caractérisé en ce qu'**
un dispositif de transmission par interface à air (RNC 14) présente un tableau (22) comprenant une affectation de respectivement un mode codec pour le codage de paquets de données du flux de données à transmettre pour le codage via l'interface à air à un en-tête RFCI pour la transmission de paquets de données dans la transmission UP dans le réseau de radiocommunication mobile.

4. Procédé selon l'une quelconque des revendications précédentes,
**caractérisé en ce que**
les paquets de données sont transmis en étant continuellement codés de manière transparente.

5. Procédé selon l'une quelconque des revendications précédentes,
**caractérisé en ce que**
les paquets de données sont transmis au moyen du framing protocol « User Plane » (UP) entre un centre de commutation (UMSC 16) et un dispositif de transmission par interface à air (RNC 14).

6. Procédé selon l'une quelconque des revendications précédentes,
**caractérisé en ce que**
lors de l'initialisation d'une transmission UP dans des centres de commutation (UMSC 16), une affectation de RFCI possibles à respectivement un mode codec possible est mémorisée dans un tableau (23).

7. Procédé selon l'une quelconque des revendications précédentes,
**caractérisé en ce que**
la transmission TrFO de paquets de données du flux de données est interrompue pour l'insertion de séquences acoustiques dans le flux de données, du fait qu'une insertion des séquences acoustiques est réalisée au moyen d'un TrFO break equipment.

8. Procédé selon l'une quelconque des revendications précédentes,
**caractérisé en ce que**
la séquence acoustique comprend des tonalités ou des annonces.

9. Dispositif de commutation (RNC 16) comprenant des moyens pour la réalisation des étapes du procédé selon l'une des revendications précédentes.

10. Dispositif de commutation (16) selon la revendication 9, comprenant une commande qui est conçue pour que, dans le cas où il est nécessaire d'insérer une séquence acoustique dans un flux de données passant dans le dispositif de commutation, elle émette à un dispositif de commutation (14) des indications représentant des modes codec AMR mémorisés dans un tableau (23), dans une mémoire du dispositif de commutation (14), via une interface, et, dans une réponse (25) obtenue par le dispositif de commutation (14) par l'intermédiaire d'une interface, elle mémorise des indications (4, 5, 6), représentant respectivement des modes codec actuellement valides, dans un tableau (26) dans une mémoire du côté du dispositif de commutation (UMSC 16), en tant que valeurs RFC à utiliser actuellement pour l'insertion de séquences acoustiques.

## Claims

1. Method for inserting an acoustic sequence (27) into a data stream which contains data packets (8, 9, 10, 11) and is transmitted in the TrFO format over a connection across a mobile radio network (14, 16, 17, 19) having switching centres (UMSC 16, 17) and air interface transmission devices (RNC 14, 19),
**characterised in that**
a notification ("Rate Control (1, 2, 3, 4, 5, 6)", 24) consisting of data packet headers (RFCI 1, 2, 3, 4, 5, 6) that can be used for transmitting data packets over the connection in the mobile radio network and are known from connection initialising is sent to the air interface transmission device (RNC 14) from the switching centre (UMSC 16),
**in that** the air interface transmission device (RNC 14) responds with a confirmation message ("Rate Control Acknowledge (4, 5, 6)", 25) indicating (25) which data packet headers (RFCI 4, 5, 6) are possible for the connection based on the codec modes (AMR 5.90/AMR 4.75/AMRSED) currently valid for the connection,
**in that** the switching device (UMSC 16) selects one of said data packet headers ("4"), then inserts data packets representing the acoustic sequence (27) and provided with said data packet header (4) into the data stream transmitted from it (UMSC 16) to an air interface transmission device (RNC 14).

2. Method according to claim 1,
**characterised in that**
the switching device (UMSC 16) selects the data packet header (RFCI 4) which, according to a table (26) of data packet headers and codec modes that is known to the UMSC, represents the currently possible codec mode (AMR 5.90 KBPS) having the highest number (4).

3. Method according to one of the preceding claims,
**characterised in that**
an air interface transmission device (RNC 14) has a table (22) having an assignment of in each case one codec mode for coding data packets requiring to be transmitted in the data stream over the air interface to a header RFCI for transmitting data packets in the UP transmission in the mobile radio network.

4. Method according to one of the preceding claims,
**characterised in that**
the data packets are transmitted coded transparently end-to-end.

5. Method according to one of the preceding claims,
**characterised in that**
the data packets are transmitted by means of the "user plane" (UP) framing protocol between a switching centre (UMSC 16) and an air interface transmission device (RNC 14).

6. Method according to one of the preceding claims,
**characterised in that**
an assignment of possible RFCIs to in each case one possible codec mode is stored in a table (23) during initialising of a UP transmission in switching centres (UMSC 16).

7. Method according to one of the preceding claims,
**characterised in that**
the TrFO transmission of data packets in the data stream is interrupted for the purpose of injecting acoustic sequences into said data stream, with said acoustic sequences being injected by TrFO break equipment.

8. Method according to one of the preceding claims,
**characterised in that**
the acoustic sequence comprises tones and/or announcements.

9. Switching device (RNC 16) having means for implementing the steps in the method according to one of the preceding claims.

10. Switching device (16) according to claim 9, having a control means embodied for sending details representing AMR codec modes stored in a table (23) in a memory of the switching device over an interface to a switching device (14) if there is a need to inject an acoustic sequence into a data stream passing through the switching device and, furthermore, for storing currently valid details (4, 5, 6) representing in each case codec modes indicated in a response received via an interface from the switching device (14) in a table (26) in a memory belonging to the switching device (UMSC 16) as RFC values currently to be used for injecting acoustic sequences.
